# EUROPEAN PATENT APPLICATION

(11) **EP 4 485 025 A1**
(43) Date of publication of application: **01.01.2025**
(21) Application number: 23182830.2
(22) Date of filing: 30.06.2023
(51) Int. Cl.: G02B 6/38, G02B 6/02

(54) **CONNECTOR ASSEMBLY, CONNECTING SYSTEM AND METHOD FOR ALIGNING CABLES**

(71) Applicant: Koninklijke Philips N.V., 5656 AG Eindhoven (NL)
(72) Inventor: STREAT, Christopher Jack, Eindhoven (NL); VAN PUTTEN, Eibert Gerjan, Eindhoven (NL)
(74) Representative: Philips Intellectual Property & Standards

(57) **Abstract**

The invention relates to a connection system and a method for connecting optical wires or cables, comprising a connector assembly (1) with a first connecting element (2) comprising a first channel (21) which is adapted to receive a first cable (5); and a second connecting element (4) comprising a second channel (41), which is adapted to receive a distal end portion of said first cable (5), wherein the first connecting element (2) is adapted to engage a first portion of the first cable (5) and the second connecting element (4) is adapted to engage an end portion of the first cable (5), wherein the first connecting element (2) is free to rotate about a longitudinal axis (L) and around the first cable (5) as long as the first connecting element (2) is not engaged with the first cable (5), wherein the second connecting element (4) is free to rotate about the longitudinal axis (L) and around the first cable (5) as long as the second connecting element (4) is not engaged with the first cable (5).

## Description

### FIELD OF THE INVENTION

The present invention relates to the field of optical data transmission and in particular to optical connection systems used to connect cables or wires embedding optical fibers.

### BACKGROUND OF THE INVENTION

Connection systems, in particular to connect cables which transfer data and signals of light or electric current, are widely known in the prior art. Such connection systems are for instance required in medical applications, when different medical instruments and sensors have to be connected to a cable or wire, which is connected to an instrument already situated within or at a body of a patient. Typically, optical fibers are used to transmit light information, wherein the use of multi-core fibers embedded or integrated or positioned in wires or cables, allowing to simultaneously transfer multiple data streams, has become technical standard. Regarding medical applications, optical fiber may be used for instance in minimally invasive procedures, by e.g. embedding fiber(s) within and along an interventional wire or catheter or other device or instrument, the fiber(s) being used to transmit information or energy towards or from the tip or sides of the device, for treatment or diagnosis or navigation purpose. In a more particular application, the multicores of the fiber are arranged with optical sensors (e.g. Bragg gratings) to retrieve position and/or orientation and/or shape information from and of the fiber when they are optically interrogated, using interferometry (by transmission or reflection) to retrieve such an information (see for instance US9784569). In the last so-called optical shape sensing application the good positioning of the cores at optical connection is of particular importance for reliability purpose.

When connecting such multi-core fibers with each other, it is important to not only align them with respect to a collinear arrangement, but also with respect to their longitudinal rotational position This ensures that preferably all fibers of the multi-fiber cable are aligned and can transmit light at the respective fiber-fiber junction.

The problem of rotational alignment in multicore fibers is commonly solved by having a large, keyed connector that can only be connected to its counterpart connector in a certain orientation. Thus, the actual rotational alignment is performed manually by the person connecting the fibers together. Another solution, described in US 10845546 B2, is to measure the quality of the signals transferred at each single fiber-fiber connection and adjust the respective position of the multi-core fibers. However, this method has turned out to be very time-consuming and requires a lot of additional equipment. Other connection systems and methods are based on a mechanical rotational alignment but however require to insert the cables attached to ferrules at certain rotational positions into the connecting apparatus or to manually rotate the cable comprising the lose end. It may however be detrimental to have to manipulate, move and rotate both cables to rotationally align them.

### OBJECT OF THE INVENTION

It is, therefore, an object of the invention to provide a connection between two multi-core cables, which is able to align the relative rotational positions of the individual fibers or fiber cores, which is easy to build and to implement and which minimizes torsion of the cables and which avoids the necessity to manually align the cables already when plugging them into the connecting system.

### SUMMARY OF THE INVENTION

According to the invention, a connector assembly, in particular for connecting data transmission cables and/or connecting optical sensors of medical applications, comprises a first connecting element comprising a first channel, which extends along a longitudinal axis and is adapted to receive a first cable; and a second connecting element comprising a second channel, which is adapted to receive a distal end portion of the first cable wherein the first connecting element is adapted to engage a first portion of the first cable and the second connecting element is adapted to engage an end portion of the first cable, wherein the first connecting element is free to rotate about a longitudinal axis and around the first cable as long as the first connecting element is not engaged with the first cable wherein the second connecting element is free to rotate about the longitudinal axis and around the first cable as long as the second connecting element is not engaged with the first cable.

This allows determining cable orientation / rotation about the longitudinal axis, without imparting any torque on the cable (so no twisting) - or on the first optical fiber comprised in the first cable. In a particular embodiment of the latter, the optical fiber is a multicore fiber, and this orientation or rotation of the fiber about the longitudinal axis may be particularly determined to position the cores at a desirable positions about the longitudinal position, if alignments of the first and connecting elements are adapted to reach this desirable position. This determined position can be implemented by this way with high accuracy, while not imparting any torque on the cable, resulting in a reliable preparation for an optical connection of a multicore fiber. As aforementioned, the connector assembly comprises two major components, the first connecting element and the second connecting element. Each of these connecting elements comprises a channel adapted to receive, guide and position a cable in a collinear orientation with respect to said longitudinal axis. The first connecting element is thereby freely rotatable relative to the first cable, i.e. the first cable reaches through the channel formed in the first connecting element without being clamped in the first channel. The first cable reaches through the first channel and into the second channel formed in the second connecting element, wherein the second connecting element is also freely rotatable with respect to the first cable. Before starting the alignment procedure, the first cable is positioned in the second channel such that its distal end faces towards the second connecting element. The first cable preferably comprises an alignment section, which is adapted to interact with at least one engagement portion formed at either the first or the second connecting element, to provide a positive fit and stop against rotation of the respective connecting element with respect to the first cable in at least one rotational direction. The alignment section may comprise a recess, a plurality of recesses, a protrusion and/or a plurality of protrusions. The first connecting element and the second connecting element comprise preferably engaging portions which are formed at the inner sides of the channels and are adapted to engage at the alignment section of the first cable. It is thereby preferred that at least one of the engagement portions is adapted to engage the alignment section only when the respective first or second connecting element is rotated in a predefined rotational direction relative to the first cable. This feature allows to bring the respective engagement portion into engagement with the alignment section of the cable or to release this engagement.

In an embodiment, the first connecting element comprises a first engagement portion which is adapted to engage with an alignment section formed at the first cable in at least a first rotational direction about the longitudinal axis, wherein the second connecting element comprises a second engagement portion which is adapted to engage with the alignment section or with an additional alignment section formed at the first cable in at least a second rotational direction, wherein an engaged state of the first and the second engagement portions at the alignment section, or with the additional alignment section, defines an aligned position of the first connecting element relative to the second connecting element. In this embodiment the cable comprises not only one alignment section but at least two alignment sections, which are separated from each other and allow the subsequent engagement of one or several engagement sections.

In an embodiment, the first channel extends along the longitudinal axis such that the alignment section, when the first cable is inserted into the first channel, extends substantially along the longitudinal axis. The alignment section may be formed as longitudinal elements (e.g. recess and/or protrusion) in or onto or into the outer coating material of the first cable. These elements may be integrally made together with the outer coating (e.g. moulding process) or made separately (e.g. by binding and/or etching process) after the outer coating has been made. In a particular embodiment the alignment section may be formed as longitudinal groove and/or protrusion in the outer coating material of the first cable. In other particular embodiments, the alignment section can also be formed at or be a part of a sleeve or rib which is imposed on the first cable. In other particular embodiments, the alignment section may comprise one of several cavities formed at the first cable, which are adapted to interact with corresponding protrusions formed at the first and the second connecting element. It is to be understood, that in terms of the present invention, the alignment section may also comprise one or a plurality of protrusions, which interact with a corresponding engagement portion formed at the first and second connecting element.

In another particular embodiment the second connecting element is further arranged to receive an end portion of a second cable along the longitudinal axis, preferably in from a side opposite the side where the first cable is to be introduced, preferably within the same channel such that a tip end of the first cable can face a tip end of the second cable.

This allows determining first cable orientation / rotation about the longitudinal axis with respect to the second cable, without imparting any torque on the first cable (so no twisting) - or on the first optical fiber comprised in the first cable to face a second optical fiber comprised in the second cable. In a particular embodiment of the latter, the first and second optical fibers are multicore fibers, and this orientation or rotation of the first fiber about the longitudinal axis with respect to the second fiber may be particularly determined to position the cores of the first cable at a desirable positions about the longitudinal position with respect to the cores of the second cable, by providing elements of alignments of the first connecting elements adapted to reach this core-to-core alignment. This determined position can be thus implemented with high accuracy, while not imparting any torque on the first and second cables, resulting in a reliable preparation for an optical connection of a multicore fiber.

In a particular embodiment the second connecting element is arranged to fixedly position the second cable, such that only the position of the first cable has to be positioned around the longitudinal axis to ensure the alignment between the two cables: This would be easier to connect than positioning both cables.

In an even more particular embodiment, the second connecting element comprises a socket which is adapted to be connected to a second cable to the connector assembly. When the first and second cable are inserted in the connector assembly, the distal ends of the first and the second cable are arranged in close proximity to each other or, in another embodiment, contact each other, to obtain an optical connection between the two.

Optionally, the second connecting element, or the end section of the first and/or second optical cables comprises an additional optical element (e.g. a lens, a GRIN lens, optical foil as known in the art) positioned between the tips of the two cables, to improve said optical connection and/or to provide a sterilibity barrier as known in the art. The first cable and the second cable are in particular multi-fiber cables which comprise each a plurality of optical fibers which are incorporated in a protecting coating layer or in a multicore fiber. By rotating the first connecting element relative to the second connecting element the second cable, which is non-rotatably mounted in the second connecting element, is also rotated relative to the first connecting element. In case, the first engagement portion formed at the first connecting element fully engages at the alignment section of the first cable, the second cable is consequently rotated relative to the first cable. The first and second engagement portions are positioned at such angular position within the channels, that in case both engagement portions engage at the alignment section of the first cable, this position implies a certain rotational position of the second cable relative to the first cable which in terms of the present invention is defined as aligned rotational position. In the aligned rotational position of the first cable and the second cable, the respective distal ends of the single fibers bundled in the first and second cable are arranged collinear to each other. This allows for optimized (optical) data transmission between single fibers of the first and the second cable because not only the distal end portions of the cables are arranged collinear to each other but the single fibers are also aligned. Furthermore, since during the alignment procedure performed with the connector assembly, the first cable is almost not affected by the relative movements of the first and the second connecting element, twisting or displacement of the first cable is minimized. This is in particular advantageous in an embodiment, where the first cable is used as guide wire in medical applications, where minimal invasive probes and instruments are inserted into the body of a patient and are controlled via the first cable.

In an embodiment, the first engagement portion is configured to be released from the engagement with the alignment section when rotated in the second rotational direction, and/or wherein the second engagement portion is configured to be released from engagement with the alignment section when rotated in the first rotational direction. Each of the first and second engagement portions is designed to incur a form fit with the alignment section of the first cable only in one rotational direction. By rotating the respective connecting element opposite to the engagement rotational direction of the respective engagement portion, the form fit between the respective connecting element and the first cable can be released with only minor forces exerted on the first cable. This allows to release the connection of the connector assembly with the first cable without risking to displace or rotate the first cable. As explained before, this is in particular advantageous in medical applications, where the first cable is placed in a sterile environment and shall remain in its position.

In an embodiment, the alignment section is formed as longitudinal groove, which extends with substantially constant cross section along the longitudinal axis. A longitudinal groove is preferably easy to manufacture and can also serve as an orientation for the user of the connector assembly, showing an approximate rotational orientation of the cable relative to the connector assembly which will ease the subsequent alignment procedure. As an alternative to a groove, the alignment section could also be designed as longitudinal protrusion or as plurality of protrusions or grooves, which are designed to engage with respectively distributed engagement portions formed at the first and the second connecting element.

According to an optional embodiment, the connector assembly comprises a third connecting element, wherein the third connecting element comprises a first guide section and a second guide section, which are arranged to drive a connection of the first to the second connecting elements, thanks to guiding elements provided on said first and second guide sections to be engaged or cooperating with the first and/or second connecting elements. These guide sections allow a more accurate and reliable close connection, particularly important in case of optical connection, in particular between multicore fibers.

In a particular embodiment, the first guide section is adapted to engage with an outer engagement surface of the first connecting element, wherein the second guide section is adapted to engage with an outer engagement surface of the second connecting element, wherein the first and second guide section are adapted to transform a longitudinal movement of the third connecting element along the longitudinal axis relative to at least one of the other of the first connecting element and the second connecting element into relative rotational movements of the first connecting element and/or the second connecting element. In particular to ease the procedure of rotating the first and the second connecting element about a predefined angle relative to each other, a third connecting element is provided, which engages at the outer sides of both, the first and the second connecting element. In an embodiment, the third connecting element is designed as tubular element, with a first and a second guide section arranged at its inner side. The first and the second guide sections can be formed as one-piece protrusions or recesses, which are adapted to slide at a respective and corresponding geometry formed at the outer surfaces of the first connecting element or the second connecting element. By moving the third connecting element parallel to the longitudinal axis relative to the first and the second connecting elements, the respective guide sections cause a rotational movement of the second connecting element relative to the first connecting element. Accordingly, a certain distance of longitudinal movement of the third connecting element causes a certain rotational movement of the first and the second connecting element relative to each other. This embodiment allows to design the third connecting element such that unnecessary rotational movements between the first and it second connecting part, and thus, unwanted twisting or torsion of the first cable, can be avoided.

In an embodiment, the first guide section of the third connecting element comprises at least one protrusion which is adapted to engage in a longitudinal groove formed at the outer side of the first connecting element, wherein the second guide section at least partially comprises a helical thread portion which engages with corresponding recesses formed at the outer surface of the second connecting element. In a very simple embodiment, the first guide section comprises a protrusion, being designed to enter a respective longitudinal groove formed at the first connecting element. Accordingly, the third connecting element can slide parallel to the longitudinal axis relative to the first connecting element and is prevented from rotating relative to the first connecting element. Furthermore, the second guide section may comprise an internal thread, also defined as helical thread portion, which serves to transform a longitudinal movement of the third connecting element relative to the second connecting element in a rotational movement of the third and the second connecting element relative to each other.

According to an embodiment, at least one of the first and second engagement portion is formed as elastically deformable portion of the first and/or the second connecting element. In a first and simple embodiment, the engagement portions are formed as one-piece sections of the respective first or second connecting element. Alternatively, the engagement portions could also be formed from different materials, which is adhesively fit or form fit within the first and second channel. Using in particular elastically deformable materials is considered to be advantageous for the aim to exert minimal forces on the first cable during relative rotation of the engagement portions and the first cable.

In another embodiment at least one of the first and second engagement portion is a ratchet element which is swivel-mounted at the first or the second connecting element and is pre-loaded towards the longitudinal axis. Ratchet elements might be more complicated to design and construct compared to elastic portions as described before. However, the exact pre-loading force exerted on the first cable can be held low and in particular the lifespan of the ratchet elements and the cable can be extended, due to minimized abrasion taking place during relative movements of the first and second connecting element relative to the first cable.

According to an embodiment, the first engagement portion includes at least one protrusion formed in the first channel, which protrudes towards the longitudinal axis, wherein the alignment section is formed as longitudinal groove and comprises at its distal end a tapering section, adapted to receive and guide said protrusion into the alignment section. As an alternative to the before described engagement portion engaging with the alignment section in only one direction, the first engagement portion could be formed as protrusion, which securely engages in at respective alignment section of the first cable. To ease the inserting procedure of the first cable into the first channel, the alignment section comprises at tapered distal end section, with the larger cross section at the front distal end. While this embodiment is easy to produce and allows for a secure positioning of the first connecting element relative to the first cable, a user must find the right orientation of the first cable and the first connecting element by himself, which reduces the handling comfort of the connector assembly.

In an embodiment, the first connecting element and the second connecting element are held in close proximity to each other, wherein a seat portion may be formed at each of the first and the second connecting element, said seat portions being adapted to align the first and the second connecting element with respect to the longitudinal axis. To increase the stability of the aligned position of the first and second connecting element, both elements may comprise a seat portion at their distal ends which engage at each other. The seat portions may incorporate tapered sections, in particular a tapered protrusion at the first connecting element and a tapered recess formed at the second connecting element.

In an embodiment, the first cable and the second cable each comprise a multicore optical fiber of at least three cores, each fiber having the same number of cores as the other fiber, and the cores of the fibers have approximately the same angular position about the longitudinal axis, wherein the maximum angle of relative rotation between the first and the second connecting element required to rotationally align the first and the second cable is based on said angular positions of the successive cores. This embodiment allows to rotationally align cables with at least three fiber cores with the minimum amount of required rotational movement of the first and second connecting element. In particular for applications, where not a certain pairing of certain fibrous arranged within the multicore first and second cable is required, the connection and alignment process performed by the connector assembly according to the invention is simplified significantly.

In an embodiment, the connector assembly is arranged to, once engaged, the tips of the first and second cables are positioned such that each core of a fiber is optically connected with a core of the other fiber, with optionally an optical device in between. The optical device can comprise a (semitransparent foil and/or optionally be adapted to ensuring a sterility between the first and second cables. Furthermore, the optical device may comprise a lens, in particular a GRIN lens.

In an embodiment the positions of the first and second engagement portions of the first and second connecting elements connecting elements have been chosen based on a determined number of cores and the respective angular positions of the cores of the first and second cables, so as to obtain an optimal core-to-core alignment once the first cable is fully engaged and the second cable is fixedly positioned in the second connecting element. It is advantageous to determine the position in particular the angular position, of the first engagement portions and the second engagement directly dependent on the number and the arrangement, in particular the angular arrangement, of the cores of the first and second cable. This will improve the alignment of single cores of a first of the first or second cable with the opposing cores of the other of the first and second cable.

In another embodiment of the invention the connector assembly is provided with a sterility barrier between the first and second cable. The sterility barrier optimizes the connector assembly for demanding medical applications, as for instance heart surgery. Preferably a first part of the connector assembly, in particular preferred the part facing towards the first cable, is situated in the sterilized region of an operation room. The sterility barrier allows to leave the other half of the connector assembly within the non-sterilized environment and thereby avoids the need to strictly sterilize the whole connector assembly.

According to another aspect of the invention a connecting system for connecting cables, in particular optical fibers, is provided comprising a manipulator assembly and a connector assembly according to one of the above described embodiments, which are mounted predominantly in a housing, wherein the transfer mechanism is configured to apply a force on the connector assembly, to align or to release the connector assembly with respect to the first and/or the second cable.

In an embodiment, the transfer mechanism applies a force on a third connecting element to align the cables or to release the connector assembly at or from at least one of said cables. The before described connector assembly may be part of a connecting system which furthermore comprises a housing and a manipulator assembly. The connector assembly and at least a part of the manipulator assembly are arranged within the housing. In particular, the housing serves to hold the first, the second and the third connecting element in their respective predefined positions and allow them to perform certain longitudinal movements and rotational movements relative to each other. The manipulator assembly may comprise a knob which allows a user to apply a rotational force and rotate the knob relative to the housing. The manipulator assembly then exerts a force on the third connecting element which starts the preferred alignment process in the connector assembly. In an embodiment of the manipulator assembly, the transfer mechanism may comprise an absorbing section, which pre-loads the third connecting element in a position, in which the engagement portions of the first and second connecting element engage at the alignment section. In this aligned state of the first and second cable, the absorbing section prevents the third connecting element from being moved further and exerting unwanted rotational forces or torque on the first cable. To achieve this, the absorbing section comprises preferably a coil spring, which is designed to provide a certain pre-loading force and to dampen and cushion unwanted relative movements within the connector assembly.

According to another embodiment, the transfer mechanism comprises an absorbing section which is adapted to hold the third connecting element in a pre-determined axial position relative to the first and second connecting element and which is adapted to absorb and cushion forces exerted by the transfer mechanism onto the third connecting element when the first and second connecting element have reached their aligned rotational positions.

In an embodiment, the manipulator assembly comprises a knob and/or a motor engaging configured to apply a momentum or a longitudinal force on a transfer mechanism, wherein the first cable extends through the manipulator assembly and into the connector assembly and is held by a holding section at a pre-determined axial position relative to the manipulator assembly.

According to the invention, a method for connecting and aligning cables, in particular optical fibers, comprises the steps:
Providing connector assembly with a first connecting element comprising a first channel and a second connecting element comprising a second channel, wherein the first and the second connecting element is arranged such that the first and the second channel are collinear to a longitudinal axis wherein the first connecting element and the second connecting element comprise engagement portions formed or attached at the respective first or second channel;
Connecting and aligning a second cable at the second connecting element, wherein the second cable is secured against rotation and movements relative to the second connecting element;
Inserting a first cable into and through the first channel and into the second channel, wherein the first cable comprises an alignment section formed or attached at its outer circumference and;
rotating the first connecting element and the second connecting element relative to each other about a longitudinal axis until both of the engagement portions engage at the alignment section and prevent further relative rotation of the first and the second connecting element;
wherein during the relative rotation of the first and the second connecting element the first cable does not move along the longitudinal axis with respect to the first and the second connecting element. As key feature of the method according to the invention, the first cable can be inserted in the connector assembly with an arbitrary rotational orientation relative to the first connecting element. This eases the connecting procedure, because the user does not have to find a certain rotational orientation of the first cable and/or the connector assembly. After the cable has been inserted in the channels of the first and second connecting element, the first and second connecting element are rotated relative to each other until engagement portions fully engage in an alignment section formed at the first cable. In this rotational position of the first connecting element and the second connecting element, a second cable, which is mounted at the second connecting element is not only arranged collinear but is also rotationally aligned with respect to the first cable.

In another aspect of the method, the rotation of the first connecting element relative to the second connecting element is driven by a third connecting element, which slides at the first connecting element along the longitudinal axis and transforms movements along the longitudinal axis into a torque rotating the second connecting element with respect to the first and the third connecting element. The use of the third connecting element eases the connecting method, because only one part has to be manipulated, which drives and rotates the first and second connecting element relative to each other. Furthermore, the third connecting element is designed to transform a certain distance of longitudinal movement into a certain rotational angle, the first connecting element rotates relative to the second connecting element.

Furthermore preferred, in the course of alignment step d) the first cable is rotated about less than 15°, preferably less than 10° and in particular preferred less than 3° around the longitudinal axis.

According to another aspect of the invention, the connector assembly is part of a connecting system, wherein during performing step d), a holding section provided in a manipulator assembly of the connecting system, holds and secures the first cable against rotation and longitudinal movements, wherein the holding section preferably comprises a clamping mechanism. The clamping mechanism may comprise rubber or other elastic and sticky material. A holding section is adapted to secure the first cable in a certain longitudinal and rotational position relative to the housing of the connecting system. This allows to prevent the first cable from twisting or longitudinal movements by holding the housing of the connecting system steady and only manipulating the manipulator assembly of the connecting system. In an embodiment, the connecting system can be mounted at a carrier, after the first cable has been inserted.

### BRIEF DESCRIPTION OF THE DRAWINGS

The invention shall now be illustrated by means of embodiments with reference to the attached drawings, in which:
Fig. 1 shows a trimetric and partially cut view of a first embodiment of a connector assembly according to the invention;
Fig. 2 shows a trimetric and partially cut view of a first embodiment of a third connecting element;
Figs. 3 and 4 show trimetric and partially cut views of an embodiment of a connector assembly according to the invention in two states;
Fig. 5 shows another trimetric and partially cut view of an embodiment of the connector assembly according to the invention;
Fig. 6 shows a schematic view of an embodiment of engagement portions according to the invention;
Fig. 7 shows a trimetric and partially cut view of a connecting system according to the invention;
Fig. 8 shows a trimetric view on an embodiment of a first and second connecting element,
Fig. 9 shows a trimetric view of a connecting system according to the invention in the assembled state;
Fig. 10 shows a trimetric view of an embodiment of a first cable;
Fig. 11 shows two schematic views of the engagement area between a cable and engagement portions;
Fig. 12 shows a trimetric view of the principle of locking at the first cable;
Fig. 13 shows a schematic view of components participating in the locking of the first and second cable;
Fig. 14 shows another schematic view of components participating in the locking of the first and second cable, and
Fig. 15 shows trimetric views of certain parts of a connecting system.

### DESCRIPTION OF EMBODIMENTS

Throughout the Figures, the same or corresponding features/elements of the various embodiments are designated with the same reference numbers.

The above-discussion is intended to be merely illustrative of the present system and should not be construed as limiting the appended claims to any particular embodiment or group of embodiments. Thus, while the present system has been described in particular detail with reference to exemplary embodiments, it should also be appreciated that numerous modifications and alternative embodiments may be devised by those having ordinary skill in the art without departing from the broader and intended spirit and scope of the present system as set forth in the claims that follow. Accordingly, the specification and drawings are to be regarded in an illustrative manner and are not intended to limit the scope of the appended claims.

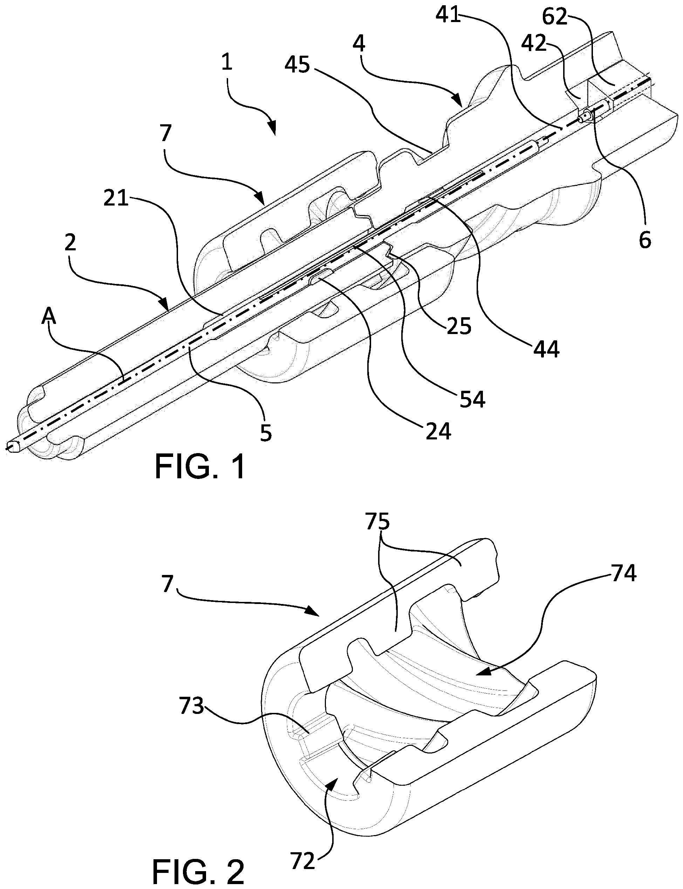

The connector assembly 1 of Fig. 1 comprises a first connecting element 2 and a second connecting element 4 which are arranged collinear to a longitudinal axis A. The first connecting element 2 comprises a first channel 21 and the second connecting element 4 comprises a second channel 41, said channels 21, 41 extend collinear to the longitudinal axis A and are adapted to receive a first cable 5. A second cable 6 is fixed to the second connecting element 4 at a socket 42 formed in the second connecting element 4 with a plug 62 or provided at the end of the second cable 6. In an embodiment, the plug 62 may be a SC ferrule. It is preferred, that the second cable 6 is fixed and secured against rotation or translational movements relative to the second connecting element 4. The first cable 5 comprises an alignment section 54 which is formed at its outer surface and serves to align the rotational position of the first connecting element 2 and the second connecting element 4 relative to the first cable 5. Since the second connecting element 4 also holds the second cable 6, aligning the rotational position of the second connecting element 4 and the first cable 5, also implies to align the rotational position of the first cable 5 and the second cable 6. To achieve an aligned rotational position of said cables 5, 6 the first and the second connecting element 2, 4 are rotated relative to each other around the longitudinal axis A until engagement portions 24, 44 formed at the inner side of channels 21, 41 are engaging the alignment section 54. Fig. 1 respectively, shows state of the connector assembly 1, in which the cables 5, 6 are not (yet) rotationally aligned. Preferably, a third connecting element 7 is provided which interacts with the first connecting element 2 and the second connecting element 4 and drives the rotation of those two connecting elements 2, 4 with respect to each other.

Fig. 2 discloses the inner geometry of an embodiment of a third connecting element 7. The third connecting element 7 may comprise a first guide section 72 and a second guide section 74 which are arranged adjacent to each other along the longitudinal axis A (not shown in Fig. 2). The first guide section 72 is adapted to interact and engage at at least one longitudinal groove 26 formed at the outer side of the first connecting element 2. The second guide section 74 may be formed as internal thread and is adapted to interact with a respective recess 45 or outer thread portion formed at the outer side of the second connecting element 4. Alternatively, instead of a first guide section 72 comprising at least one protrusion 73, the first guide section 72 could also comprise one or several recesses which interact with corresponding protrusions formed at the outer side of the first connecting element 2. In the embodiment of Fig. 2, the third connecting element 7 is a rather simple sleeve which is easy to manufacture and utilizes high stability due to its one-piece design.

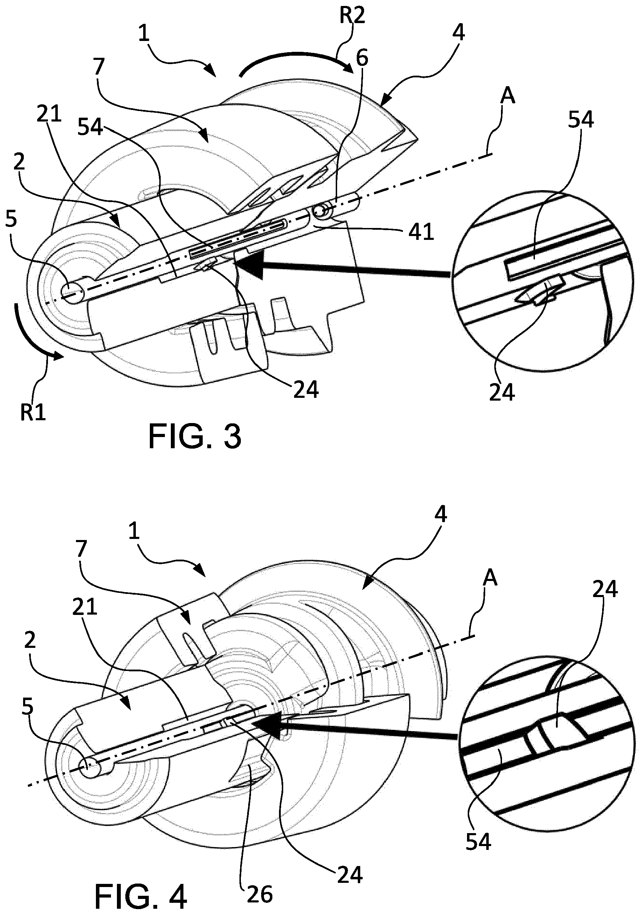

Figs 3 and 4 show trimetric and partially cut views on an embodiment of the connector assembly 1 in a state, in which the first cable 5 and the second cable 6 are not aligned (Fig. 3) and in a state, in which the first cable 5 and the second cable 6 are rotationally aligned with respect to each other. As shown in Fig. 3 the engagement portions 24, 44 do not (yet) engage at the alignment section 54. To reach the aligned state shown in Fig. 4, the first connecting element 2 is rotated in a first rotational direction R1 and the second connecting element 4 is rotated in a second rotational direction R2 accordingly. In the embodiment of Figs 3 and 4 a third connecting element 7 interacts with both, the first and the second connecting element 2, 4, and rotates both elements accordingly. After rotation of the first connecting element 2 about 20° to 45° degrees relative to the first cable 5, the first engagement portion 24 engages at the alignment section 54 and prevents further rotation of the first connecting element 2 relative to the first cable 5. Accordingly, the second connecting element 4 together with the second cable 6 is rotated until the second engagement portion 44 engages in the alignment section 54, and further rotation of the second connecting element 4 relative to the first cable 5 is prevented and the aligned state of the first and the second cable 5, 6 is reached. In the embodiment shown in Figs 3 and 4, the first connecting element 2 could be rotated in the second rotational direction R2 to release the engagement of the first engagement portion 24. Accordingly, the second connecting element 4 could be rotated in the first rotational direction R1 to release the engagement of the second engagement portion 44. This feature enables the connector assembly to create and release an aligned connection of two cables 5, 6.

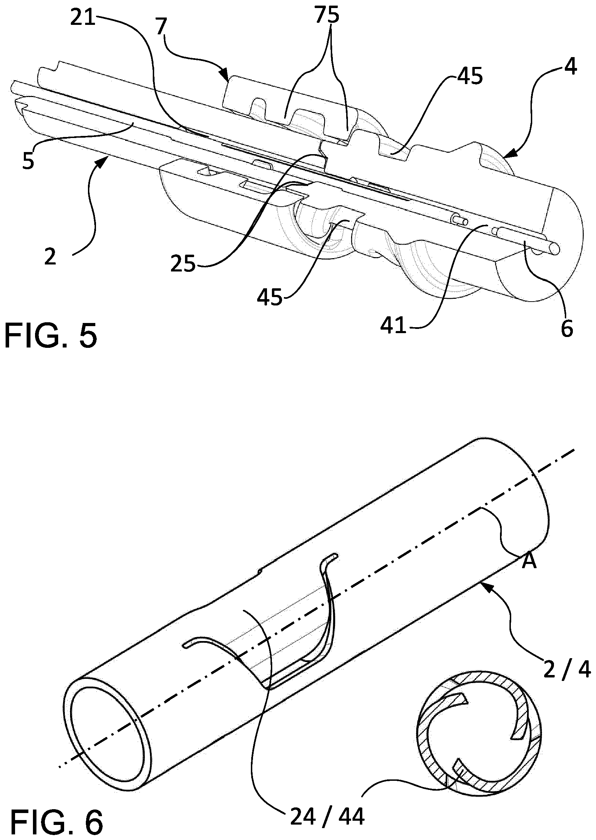

Fig. 5 shows another view on an embodiment of the connector assembly 1, in particular on the interacting geometry formed at the third connecting element 7 and the second connecting element 4. Fig. 5 discloses the state of the connector assembly 1 also shown in Fig. 3, i.e. the first and the second cable 5, 6 are not rotationally aligned and the engagement portions 24, 44 do not engage at the alignment section 54. At the outer surface of the second connecting element 4 and engagement geometry with recesses 45 is formed, which are adapted to interact with the helically extending thread portion 75 formed at the third connecting element 7. During its longitudinal movement, the third connecting element 7 rotates the second connecting element 4 according to the helical shape of the respective thread shaped protrusions and recesses. Since of the third connecting element 7 is secured against rotation relative to the first connecting element 2, this implies relative rotation of the second connecting element 4 and the first connecting element 2.

Fig. 6 shows an embodiment of engagement portions 24, 44 formed at the first and/or the second connecting element 2, 4. In this very simple embodiment, the engagement portions 24, 44 are formed as cut and slightly inwardly bent portions of the material of the respective connecting element 2, 4. The number of three engagement portions 24, 44 uniformly distributed along the circumference of the channel 21, 41 is preferred for aligning a multifiber cable with three fibers, wherein each of the fibers can be rotationally aligned with their respective counterparts at a second multicore cable. A rotation of the respective first or second connecting element 2, 4 of less than or equal 120° is sufficient for aligning the first and second cable 5, 6, i.e. creating three pairs of coaxially positioned fibers.

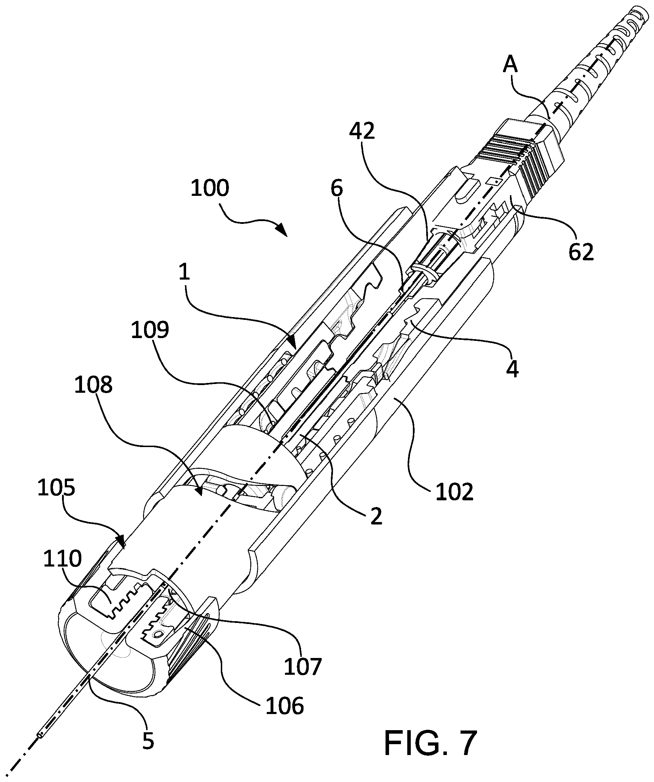

Fig. 7 shows an embodiment of a connecting system 100, which comprises a connector assembly 1 according to the embodiments of Figs 1 - 6, a housing 102 and a manipulator assembly 105. The manipulator assembly 105 comprises a knob 106 and a transfer mechanism 108, wherein the knob 106 is positioned outside the housing 102 and the transfer mechanism 108, together with the connector assembly 1, is predominantly mounted inside the housing 102. A first cable 5 is inserted in the connecting system 100 and passes through the manipulator assembly 105 and into the second connecting element 4 of the connector assembly 1. The manipulator assembly 105 comprises a holding section 107, which is adapted to hold the first cable 5 with a clamping and friction fit in its position relative to the non-rotating parts of the manipulator assembly 105. When a user rotates the knob 106 in a clockwise direction relative to the housing 102, the momentum is transferred to a carrier element 110 which then drives the transfer mechanism 108 which transforms this rotational movement into a longitudinal movement of the third connecting element 7 of the connector assembly 1 parallel to the longitudinal axis A. At the moment the engagement portions 24, 44 are in full engagement with the alignment section 54 of the first cable 5, the third connecting element 7 stops and an absorbing section 109 cushions and dampens the remaining longitudinal movement of the transfer mechanism 108 and slightly pre-loads the third connecting element 7 against the second connecting element 4 or against an abutment face formed within the housing 102. In an alternative embodiment, the manipulator assembly 105 can be a motor, which is either designed to push or pull the third connecting element 7, or which furthermore even replaces the third connecting element 7 and directly rotates at least the second connecting element 4 or both, the first and the second connecting element 2, 4. The advantage of using an internal motor to mount and align the cables 5, 6 or to dismount the connection is, that the connection system could be placed in regions which are difficult to reach for a user or which require special sterile environments. Potential disadvantages of using a motor are the higher costs and the necessity to supply electric current. On the other hand, a motor allows to perfectly adjust the maximum torque the motor applies on the first and second connecting element which could minimize bending and torsion of the first cable 5.

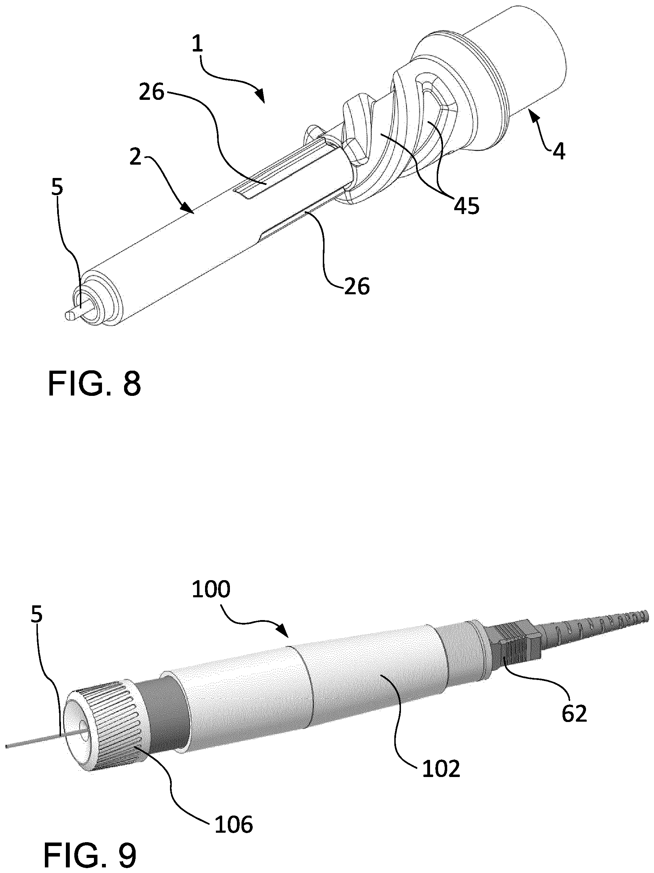

Fig. 8 shows a trimetric view on a connector assembly 1 comprising a first connecting element 2 and a second connecting element 4 which basically comprise the same features as in the embodiments of Figs 1-5 and 7. In particular, the first connecting element 2 comprises at least one, in the embodiment of Fig. 8 three, longitudinal grooves 26. Furthermore, the helically extending recesses 45 formed between respective helically extending protrusions formed at the outer side of the second connecting element 4 are adapted to interact with the helical thread portion 75 of the third connecting element 7.

Fig. 9 shows a trimetric view of a connecting system according to the invention in the assembled state. In this state the first cable 5 is inserted in the connecting system 100 and locked by rotating the knob 106 to bring the connector assembly 1 into the locked state. The housing 102 covers and protects the connector assembly 1.

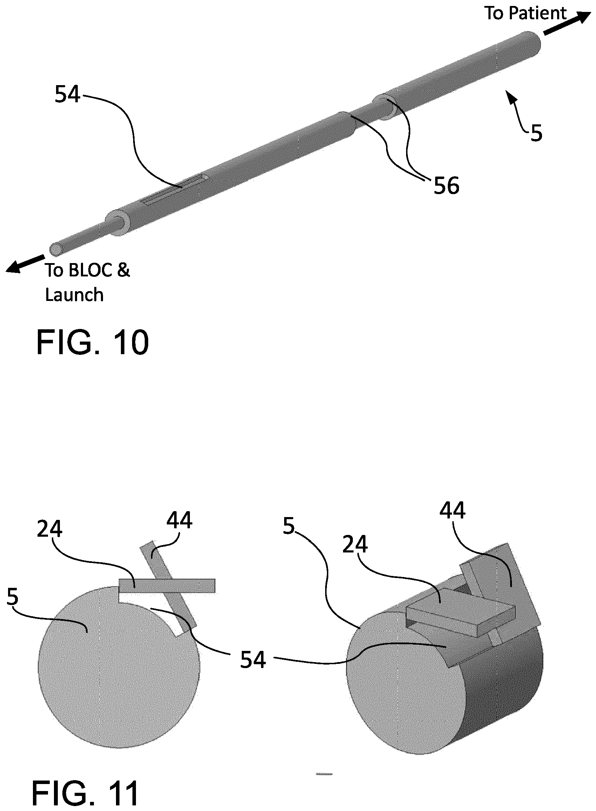

Fig. 10 shows a trimetric view of an embodiment of a first cable 5. The cable 5 comprises an alignment section 54, which in this embodiment is formed as groove. Furthermore and optionally, the cable 5 comprises two end stops 56, which ease finding the correct axial position of the cable 5 inside the connector assembly 1.

Fig. 11 shows two schematic views of a principle of engagement area between an embodiment of the first cable 5 and engagement portions 24, 44. In this embodiment, the engagement portions 24, 44 rotate about axes parallel to the longitudinal axis of the first cable 5 to swing into and out of the positive engagement with the alignment section 54 formed at the first cable 5.

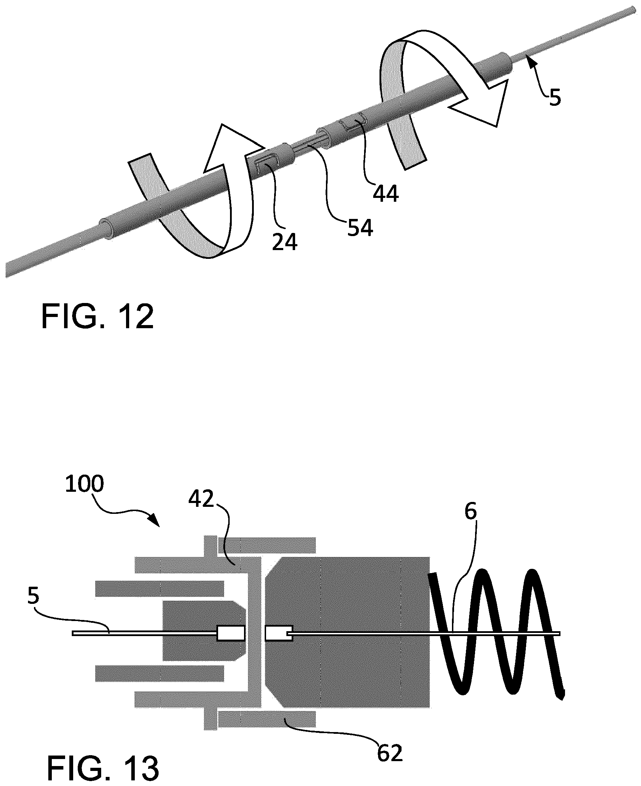

Fig. 12 shows a trimetric view of the principle of locking at the first cable 5, wherein the parts visible are arranged inside a preferred embodiment of the connector assembly 1. The first tubular element comprises the first engagement portion 24, the second tubular element comprises the second engagement portion 44. Preferably, cable 5 is inserted into both tubular elements and the tubular elements are rotated relative to each other until both engagement portions 24, 44 get in engagement with the alignment section 54 or with separate alignment sections 54.

Fig. 13 shows a schematic view of components participating in the locking of the first and second cable 5, 6, wherein in this embodiment the plug 62 with the second cable 6 may be formed as C-sleeve. The socket 42 connected to the first cable 5 is preferably formed as P-sleeve. the cables 5, 6 are seated in two ferrules. Preferably, a GW tube is arranged between the ferrule and the socket 42 and improves the connection between the cable 5 and the socket 42.

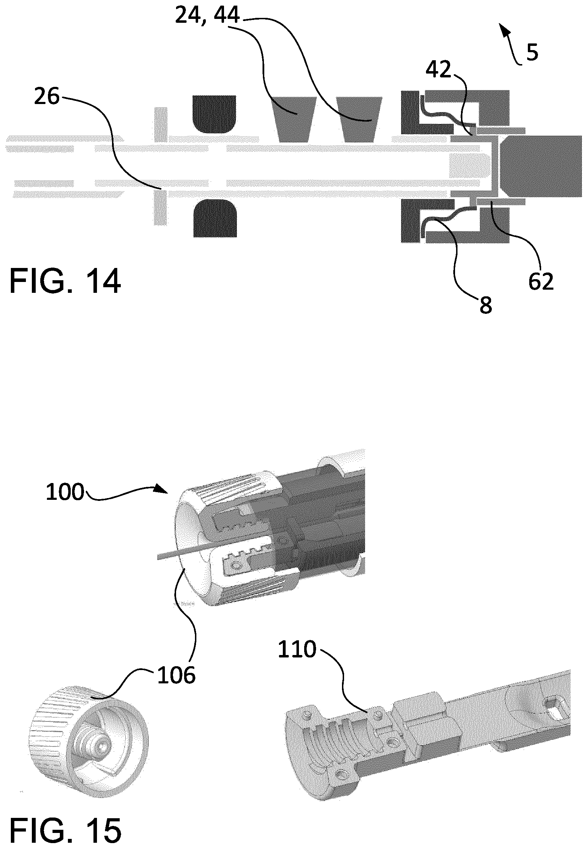

Fig. 14 shows another schematic view of components participating in the locking of the first and second cable. In particular, a sterility barrier 8 is arranged in the region between the socked 42 and the plug 62 may be additionally covered by an additional cap. Such a sterility barrier may be, as well-known, formed of a (semi-)transparent foil or lens provided between the cables, or any sterile surface (e.g. a, antimicobiological treated surface) provided between or at the end of one cable.

Fig. 15 shows trimetric views of certain parts of a connecting system 100. In particular an embodiment of the knob 106 comprises an inner protrusion with a thread. This inner protrusion is adapted to be screwed into an according threaded hole formed in a carrier element 110. Shown in Fig. 15 is only one half of the carrier element 110, wherein the other half is adapted to engage with a positive fit at the half shown, to form the carrier element 110.

While the invention has been illustrated and described in detail in the drawings and foregoing description, such illustration and description are to be considered illustrative or exemplary and not restrictive; the invention is not limited to the disclosed embodiments. For example, it is possible to operate the invention in an embodiment wherein cables have to be connected to each other and easily disconnected from each other in demanding environments, as for instance in the chemical industry or at clean rooms in the semiconductor manufacturing industry..

Other variations to the disclosed embodiments can be understood and effected by those skilled in the art in practicing the claimed invention, from a study of the drawings, the disclosure, and the appended claims. In the claims, the word "comprising" does not exclude other elements or steps, and the article "a" or "an" does not exclude a plurality, that a single processor or other unit may fulfill the functions of several means recited in the claims, and that features recited in separate dependent claims may be advantageously combined. For (potentially) important combinations of features claimed in separate dependent claims that may or may not refer to each other, such general statements (and any references of one dependent claim to another) should not be the only basis in the application for the idea that a combination is possible and advantageous. If multiple dependent claims are present, such additional basis in the description for (potentially) important combinations is also desirable as in some jurisdictions, multiple dependencies will be amended. Any reference signs in the claims should not be construed as limiting the scope.

### REFERENCE SIGNS

- 1: connector assembly
- 2: first connecting element
- 4: second connecting element
- 5: first cable
- 6: second cable
- 7: third connecting element
- 21: first channel
- 24: first engagement portion
- 25: seat portion
- 26: longitudinal groove
- 41: second channel
- 42: socket
- 44: second engagement portion
- 45: recess
- 54: alignment section
- 62: plug
- 72: first guide section
- 74: second guide section
- 75: helical thread portion
- 100: connecting system
- 102: housing
- 105: manipulator assembly
- 106: knob
- 107: holding section
- 108: transfer mechanism
- 109: absorbing section
- A: longitudinal axis
- R1: first rotational direction
- R2: second rotational direction

## Claims

1. Connector assembly (1), in particular for connecting at least one cable comprising an optical fiber, comprising:
a first connecting element (2) comprising a first channel (21) adapted to receive a first cable (5); and
a second connecting element (4) comprising a second channel (41), which is adapted to receive a distal end portion of said first cable (5),
wherein the first connecting element (2) is adapted to engage a first portion of the first cable (5) and the second connecting element (4) is adapted to engage an end portion of the first cable (5),
wherein the first connecting element (2) is free to rotate about a longitudinal axis (L) and around the first cable (5) as long as the first connecting element (2) is not engaged with the first cable (5),
wherein the second connecting element (4) is free to rotate about the longitudinal axis (L) and around the first cable (5) as long as the second connecting element (4) is not engaged with the first cable (5).

2. Connector assembly (1) according to claim 1,
wherein the first connecting element (2) comprises a first engagement portion (24) which is adapted to engage with an alignment section (54) formed at the first cable (5) in at least a first rotational direction (R1) about the longitudinal axis (A),
wherein the second connecting element (4) comprises a second engagement portion (44) which is adapted to engage with the alignment section (54), or with an additional alignment section formed at the first cable (5), in at least a second rotational direction (R2),
wherein an engaged state of the first and the second engagement portions (24, 44) at the alignment section (54) and/or the additional alignment section defines an aligned position of the first connecting element (4) relative to the second connecting element (4).

3. Connector assembly (1) according to claim 2,
wherein the first channel (21) extends along the longitudinal axis (A) such that the alignment section (54), when the first cable (5) is inserted into the first channel (21), extends substantially along the longitudinal axis (A).

4. Connector assembly (1) according to any one of claims 2 or 3,
wherein the first engagement portion (24) is configured to be released from the engagement with the alignment section (54) when rotated in the second rotational direction (R2), and/or wherein the second engagement portion (44) is configured to be released from the engagement with the alignment section (54) when rotated in the first rotational direction (R1).

5. Connector assembly (1) according to any of the preceding claims,
wherein the second connecting element (4) is further arranged to receive an end portion of a second cable (6) along the longitudinal axis.

6. Connector assembly (1) according to the preceding claim,
wherein the second connecting element (4) is further arranged to fixedly position said portion of the second cable (6) along the longitudinal axis, and wherein the second connecting element (4) comprises a socket (42) which is adapted to be connected to the second cable (6).

7. Connector assembly (1) according to any of the preceding claims,
further comprising a third connecting element (7),
wherein the third connecting element (7) comprises a first guide section (72) and a second guide section (74),
wherein the first guide section (72) is adapted to engage with an outer engagement surface of the first connecting element (2),
wherein the second guide section (74) is adapted to engage with an outer engagement surface of the second connecting element (4),
wherein the first and second guide section (72, 74) are adapted to transform a longitudinal movement of the third connecting element (7) along the longitudinal axis (A) relative to at least one of the first connecting element (2) and the second connecting element (4) into relative rotational movements of the other of the first connecting element (2) and/or the second connecting element (4).

8. Connector assembly (1) according to claim 7,
wherein the first guide section (72) comprises at least one protrusion (73) (or groove) which is adapted to engage in a longitudinal groove (26) (or protrusion respectively) formed at the outer engagement surface of the first connecting element (2),
wherein the second guide section (74) at least partially comprises a helical thread portion (75) which engages with corresponding recesses (45) formed at the outer engagement surface of the second connecting element (4).

9. Connector assembly (1) according to any of the preceding claims,
wherein at least one of the first and second engagement portion (24, 44) comprises elastically deformable portion of the first and/or the second connecting element (2, 4).

10. Connector assembly (1) according to any of the preceding claims,
wherein at least one of the first and second engagement portion (24, 44) is a ratchet-like element which is swivel-mounted at the first and/or the second connecting element (2, 4) and is pre-loaded towards the longitudinal axis (A).

11. Connector assembly (1) according to any of claims 2-9,
wherein the first engagement portion (24) includes at least one protrusion (or groove) formed in the first channel (21), which protrudes (extends) towards the longitudinal axis (A),
wherein the alignment section (54) is formed as longitudinal groove (or protrusion, respectively) and comprises at its distal end a tapering section, adapted to receive and guide said protrusion (or groove) into (or onto) the alignment section (54).

12. Connector assembly (1) according to claim 5,
wherein the first cable (5) and the second cable (6) each comprise a multicore optical fiber of at least three cores, each fiber having the same number of cores as the other fiber, and the cores of the fibers have approximately the same angular position about the longitudinal axis (L),
wherein the maximum angle of relative rotation between the first and the second connecting element (2, 4) required to rotationally align the first and the second cable (5, 6) is based on said angular positions of the successive cores.

13. Connecting system (100) for connecting cables, in particular optical fibers,
comprising a manipulator assembly (105) and a connector assembly (1) according to one of claims 1 - 12, which are mounted predominantly in a housing (102),
wherein a holding section (107) is adapted to hold a first cable (5), once inserted in the connecting system (100), at a pre-determined axial position relative to the manipulator assembly (105);
wherein a transfer mechanism (108) is configured to apply a force on the connector assembly (1) to align or to release the connector assembly (1) with respect to the first and/or the second cable (5, 6) .

14. Connecting system (100) according to claims 7 and 13, wherein the transfer mechanism (108) comprises an absorbing section (109) which is adapted to hold a third connecting element (7) in a pre-determined axial position relative to the first and second connecting element (2, 4) and which is adapted to absorb and cushion forces exerted by the transfer mechanism (108) onto the third connecting element (7) when the first and second connecting element (2, 4) have reached their aligned rotational positions.

15. Connecting system (100) according to any of claims 13 or 14,
wherein the manipulator assembly (105) comprises a knob (106) and/or a motor engaging configured to apply a momentum or a longitudinal force on the transfer mechanism (108).

16. Method for connecting and aligning cables, preferably optical fibers, comprising the steps:
providing connector assembly (1) with a first connecting element (2) comprising a first channel (21) and a second connecting element (4) comprising a second channel (41), wherein the first and the second connecting element (2, 4) are arranged such that the first and the second channel (21, 41) are collinear to a longitudinal axis (A)
wherein the first connecting element (2) and the second connecting element (4) comprise engagement portions (24, 44) formed or attached at the respective first or second channel (21, 41);
connecting and aligning a second cable (6) at the second connecting element (4);
Inserting a first cable (5) into and through the first channel (21) and into the second channel (41),
wherein the first cable (5) comprises an alignment section (54) formed or attached at its outer circumference and;
rotating the first connecting element (2) and the second connecting element (4) relative to each other about a longitudinal axis (A) until both of the engagement portions (24, 44) engage at the alignment section (54) and prevent further relative rotation of the first and the second connecting element (2, 4);
wherein during the relative rotation of the first and the second connecting element (2, 4) the first cable (5) does not move along the longitudinal axis (A) with respect to the first and the second connecting element (2, 4).
